# EUROPEAN PATENT APPLICATION

(11) **EP 3 522 016 A2**
(43) Date of publication of application: **07.08.2019**
(21) Application number: 19154360.2
(22) Date of filing: 29.01.2019
(51) Int. Cl.: G06F 9/50

(54) **TOUCH SCREEN CONTROLLER WITH DATA EXCHANGE AND MINING SERVICE**

(30) Priority: 05.02.2018 US 201815888810
(71) Applicant: Honeywell International Inc., Morris Plains, NJ New Jersey 07950 (US)
(72) Inventor: SHAMASUNDAR, Raghu, Morris Plains, NJ New Jersey 07950 (US); SIVARATRI, Mahesh, Morris Plains, NJ New Jersey 07950 (US); PEARSON, Mark, Morris Plains, NJ New Jersey 07950 (US); KHAN, Kalimulla, Morris Plains, NJ New Jersey 07950 (US); WISNER, Todd, Morris Plains, NJ New Jersey 07950 (US)
(74) Representative: Houghton, Mark Phillip

(57) **Abstract**

A touch screen controller for an aircraft and a method for operating the same are provided. The method, for example, may include, but is not limited to, receiving, by a core interface in a first core of a touch screen controller, a data or service request for a flight management system from a second core of a touch screen controller, validating, by the core interface, the received data or service request for the flight management system, wherein the data or service request is validated when the applications executing on the first core are idle, a flight phase of the aircraft matches a flight phase associated with the application executing on the second core, and the data or service request is within aircraft performance limits and operational limits.

## Description

### TECHNICAL FIELD

The present invention generally relates to aircraft, and more particularly relates to touch screen controllers in aircraft.

### BACKGROUND

Touch screen display systems are often found in new aircraft. However, there is also desire to be able to update older aircraft to include touch screen display systems. Touch screen display systems are more versatile than older interface types, such as multifunction control display unit interfaces. For example, custom graphical intensive applications can be executed on touch screen display systems which could not otherwise be executed on multifunction control display units.

### BRIEF SUMMARY

In one embodiment, for example, an aircraft is provided. The aircraft may include, but is not limited to, a touch screen controller configured to be mounted in an aircraft cockpit in place of a multi-purpose control display unit and configured to communicate with a plurality of avionics systems including an aircraft flight management system) and a communication management function via a standard multi-purpose control display unit interface, the touch screen controller including, but not limited to a first core comprising a data mining engine, a first processor and a first memory, the first processor configured to execute first level certified applications, the first level certified applications configured to request access to the data mining engine, the data mining engine configured to request and retrieve page data from the standard multi-purpose control display unit interface, where the page data comprises active flight plan data, fuel and weights data, aircraft state data, and aircraft sensor data, and execute a core interface, the core interface controlling access to the data mining engine, a second core comprising a second processor and a second memory, the second processor configured to execute second level certified applications, the second level certified applications having a lower certification level than the first level certified application, the second level certified applications configured to request access to the data mining engine through the core interface, and a third core comprising a third processor and a third memory, the third processor configured to execute uncertified applications, the uncertified applications having a lower certification level than the second level certified application, the uncertified applications configured to request access to the data mining engine through the core interface, wherein the core interface is further configured to determine when the executed first level certified applications are idle, and determine application service characteristics, the application service characteristics comprising a periodicity, a type of service, and a registry specification of the respective requesting second level certified application or uncertified application, and determine a flight phase and a flight mission context of the aircraft based upon data from the flight management system, and grant access to the data mining engine to the second core and the third core when all of the first level certified applications are idle, the flight phase of the aircraft matches a flight phase associated with the respective second level certified application or uncertified application, the service characteristics associated with the respective second level certified application or uncertified application are within the registered service configuration of core interface, and the service request associated with the respective second level certified application or uncertified application is within aircraft performance limits or operational or mission limits.

In another embodiment, for example, a touch screen controller is provided. The touch screen controller may include, but is not limited to, a first core comprising a data mining engine, a first processor and a first memory, the first processor configured to execute first level certified applications, the first level certified applications configured to request access to the data mining engine, the data mining engine configured to request and retrieve page data from a flight management system, and execute a core interface, the core interface controlling access to the data mining engine, a second core comprising a second processor and a second memory, the second processor configured to execute second level certified applications, the second level certified applications having a lower certification level than the first level certified application, the second level certified applications configured to request access to the data mining engine through the core interface, and a third core comprising a third processor and a third memory, the third processor configured to execute uncertified applications, the uncertified applications having a lower certification level than the second level certified application, the uncertified applications configured to request access to the data mining engine through the core interface, wherein the core interface is further configured to determine when the executed first level certified applications are idle, and determine application service characteristics, the application service characteristics comprising a periodicity, a type of service, and a registry specification of the respective requesting second level certified application or uncertified application, and determine a flight phase and a flight mission context of the aircraft based upon data from the flight management system, and grant access to the data mining engine to the second core and the third core when all of the first level certified applications are idle, the flight phase of the aircraft matches a flight phase associated with the respective second level certified application or uncertified application, the service characteristics associated with the respective second level certified application or uncertified application are within the registered service configuration of core interface, and the service request associated with the respective second level certified application or uncertified application is within aircraft performance limits or operational or mission limits.

In yet another embodiment, for example, a method for controlling a touch screen display for an aircraft is provided. The method may include, but is not limited to, receiving, by a core interface in a first core of a touch screen controller, a data or service request for a flight management system from a second core of a touch screen controller, wherein the first core of a touch screen controller executes applications having a first certification level and the second core of a touch screen controller executes applications having a second certification level, the first certification level being higher than the second certification level, validating, by the core interface, the received data or service request for the flight management system, wherein the data or service request is validated when the applications executing on the first core are idle, a flight phase of the aircraft matches a flight phase associated with the application executing on the second core, and the data or service request is within aircraft performance limits and operational limits, transmitting, by a data mining engine in the first core, the received data or service request to the flight management system when the core interface validates the received data or service request.

### BRIEF DESCRIPTION OF THE DRAWINGS

The present invention will hereinafter be described in conjunction with the following drawing figures, wherein like numerals denote like elements, and wherein:
FIG. 1 is a block diagram of an aircraft in accordance with an embodiment;
FIG. 2 is a block diagram of the touch screen display system in accordance with an embodiment; and
FIG. 3 is a flow diagram illustrating an exemplary method for operating the touch screen controller, in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A touch screen display system and a method for operating the same are provided herein. As discussed in further detail below, the touch screen display system can execute applications having varying levels of certification while still protecting the core operation of the aircraft.

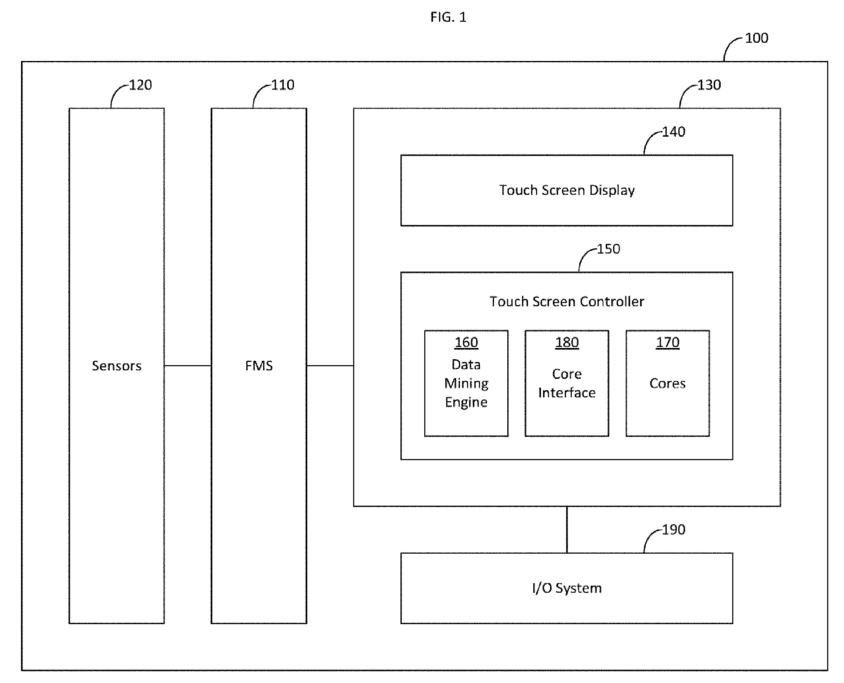

FIG. 1 is a block diagram of an aircraft 100 in accordance with an embodiment. In one embodiment, for example, the aircraft 100 may be an airplane. However, in other embodiments the aircraft may be a helicopter, a spacecraft or the like. The aircraft 100 includes a flight management system (FMS) 110 and multiple sensors 120. The FMS 110 utilizes data from the sensors 120 to aid in the operation of the aircraft 100. For example, the FMS 110 may manage a flight plan for the aircraft 100 utilizing sensors 120 such as a global positioning system (GPS), air speed sensors, altimeters, or any other aircraft sensors and any combination thereof.

As discussed above, the interface between a crew of the aircraft 100 and the FMS 110 is typically a multifunction control display unit (MCDU). However, due to the architecture and form factor of the MCDU, the functionality of the MCDU is limited. However, there are operators, airliners and original equipment manufacturers (OEMs) seeking opportunities to enhance existing aircraft cockpit capabilities in terms of advanced applications in order to improve flight safety and fuel efficiency. Accordingly, the aircraft 100 includes a touch screen display system 130. The touch screen display system 130 may be installed within a cockpit (not illustrated) of the aircraft 100. In some instances, the touch screen display system 130 may be retrofit onto older aircraft 100 to replace a MCDU without any changes to MCDU driven applications such as the FMS 110, communication management function (CMF) systems radios, and the like. However, the touch screen display system 130 may be installed in new aircraft 100 as well.

The touch screen display system 130 includes a touch screen display 140 and a touch screen controller 150. The touch screen display 140 may be a liquid crystal display (LCD), a light emitting diode (LED) display, an organic LED (OLED) display or the like.

The touch screen controller 150 includes a data mining engine 160. The data mining engine communicates with the FMS 110 using the same communication bus and communication protocol as a MCDU. The communication bus may be an A429 bus, a RS422, a custom protocol, or any combination thereof. The A429 and RS422 bus, for example, are the standard transfer protocol typically used between an FMS 110 and a MCDU. In aircraft using an MCDU, the MCDU sends button push events representative of data and service requests to the FMS 100 based on pilot interactions with MCDU. In response to receiving the button push events, the FMS 110 services the corresponding requests and sends updated page data back to the MCDU. Some MCDU events/request would just refresh the pages. The page of data may include multiple data points. For example, a For Progress Data page, the following data attribute which will be retrieved from the FMS 110 system on data request: From Waypoint, From Waypoint Distance, From Waypoint UTC, From Waypoint Altitude and Speed. To Waypoint, To Waypoint Distance, To Waypoint UTC and To Waypoint Altitude and Speed parameters. In this embodiment where MCDU is replaced with the touch screen display system 130 capable of handling improved and intuitive GUI and host of new applications, the data mining engine 160 translates user interactions with the touch screen display system 130 into data and/or service requests using the existing MCDU-FMS communication without any change to FMS 110. The data mining engine 160 determines, based upon the data being requested, which page of data from the FMS 110 the requested data is located upon and generates the request over the A429 and RS422 bus

Because the touch screen display system 130 leverages the A 429 and RS422 bus to communicate with the FMS 110, the touch screen display system 130 can easily be retrofit into legacy aircraft. However, because the nature of a touch screen display system 130 allows for expanded functionality versus a MCDU (e.g., custom and smart/advanced applications, variable interfaces, etc.), the number of applications running on the touch screen display system 130 and the amount of data being requested by the touch screen display system 130 from the FMS 110 may be much greater than in an aircraft utilizing a MCDU. The data and service requests being generated by the applications hosted on touch screen controller 150 are served by underlying avionics applications such FMS 110. However, the performance of FMS 110 should not be affected by these applications. Accordingly, the touch screen display system 130 monitors and limits applications operating on the touch screen display system 130 such that the functionality of the FMS 110 (such as navigation, guidance and flight path trajectory calculation, should NOT to be affected or degraded the core performance) is not affected or degraded.

The touch screen controller 150 further includes multiple cores 170. Each core 170 executes applications of a predetermined certification level. One core 170 executes applications having a highest certification level and which are vital to the core operation of the aircraft 100. Other cores 170 may execute applications having lower certification levels or applications which are uncertified. A core interface 180 controls the interaction between the cores 170 while protecting the core operating the applications having a highest certification level as discussed in further detail below.

The aircraft 100 may further include an input/output (IO) system 190. The IO system 190 allows a crew of the aircraft 100 to interact with the touch screen display system 130 and, possibly, other components of the aircraft 100. The IO system 190 may include, for example, microphones for voice controls, speakers for audio feedback, one or more cameras for gesture controls, eye controls or the like, one or more haptic feedback systems, wireless gateway for wireless applications, or the like.

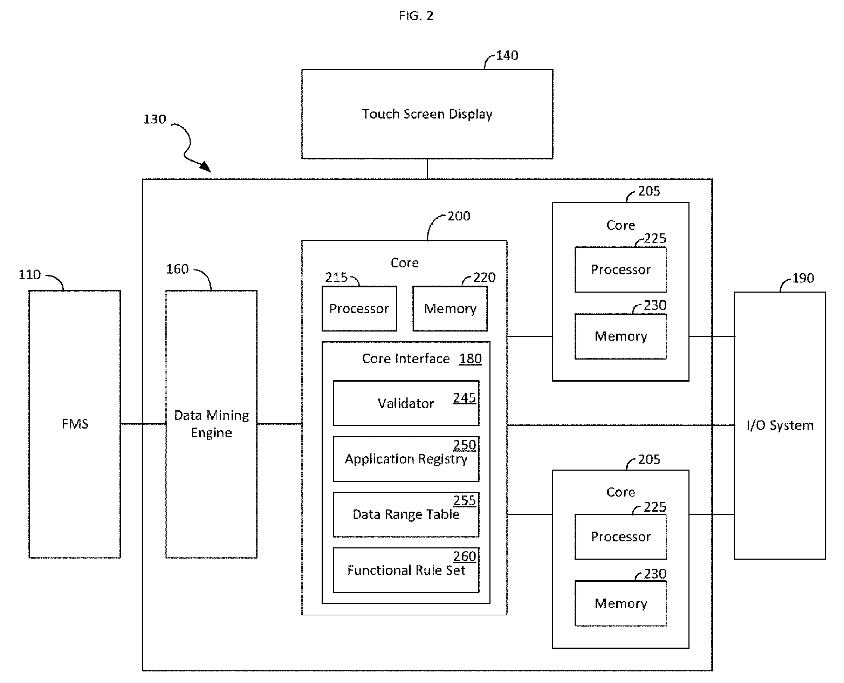

FIG. 2 is a block diagram of the touch screen display system 130 in accordance with an embodiment. As seen in FIG. 2, the touch screen controller 150 includes multiple cores 200, 205 and 210. While there are three cores illustrated in the embodiment illustrated in FIG. 2, the touch screen controller 150 could have two or more cores.

Each core 200, 205 and 210 includes a processor and a memory. As illustrated in FIG. 2, the core 200 includes processor 215 and memory 220, the core 205 includes processor 225 and memory 230, and the core 210 includes processor 235 and memory 240. The processor 215, 225 and 235 may be a central processing unit (CPU), a graphics processing unit (GPU), an application specific integrated circuit (ASIC), a field programmable gate array (FPGA), or any other logic device or combination thereof. The memory 220, 230 and 240 may be any combination of volatile and non-volatile memory. While each core 200, 205 and 210 is illustrated as having their own processor 215, 225 and 235 and memory 220, 230 and 240, the cores 200, 205 and 210 could share one or more processors or memory units. In one embodiment, for example, all of the cores 200, 205 and 210 may be executed by a single processor and/or a shared memory. In this embodiment, each core may be executed on a separate partition or other virtual divide that effectively separates the operation of each core and allows the core interface 180 to protect the core having the highest priority, as discussed in further detail below.

The core 200 may execute applications having a highest certification level. In one embodiment, for example, the highest certification level may be a Level B Certification. Examples of Level B Certified applications include, for example, a FMS primary user interface applications. Cores 205 and 210 may execute non Level B certified application. For example, core 205 may execute applications having a second certification level which is lower than the highest certification level and a core 210 may execute applications having no certification level. Applications having the highest certification level have been certified to guarantee their operation within certain parameters, such as data usage, processing usage, operation time and the like. In contrast, applications having a lower certification level or uncertified applications are not certified to operate within desirable parameters during all operating conditions. For example, lower lever certified applications or uncertified applications could utilize too many resources, therefore blocking or degrading the performance of the applications run in the core 200.

As illustrated in FIG. 2, the core 200 includes the core interface 180. The core interface 180 acts to protect the core 200 running the applications having the highest certification level from other cores which may be running lower lever certified applications or uncertified applications. In one embodiment, for example, the processor 215 and memory 220 may execute the core interface 180. However, in other embodiments, the core interface 180 may be executed on a processor and a memory dedicated to the core interface 180 or on any other shared resource on the aircraft 100.

The core interface 180 includes a validator 245. The validator 245 validates data and service requests from the core 205 and the core 210 based upon data in an application registry 250, a data range table 255 and a functional rule set 260. The application registry 250 includes the names of the application operating on all of the cores 200-210 which are allowed to access the data mining engine. Furthermore, the application registry 250 includes a list of all of the application program interfaces (APIs) that each application is authorized to use. The application registry 250 may list an allowable periodicity for which each application can generate a data and service requests for each API used by the application. The data range table 255 includes minimum and maximum values for various parameters that the applications in the cores 200-210 could query with, as discussed in further detail below. The functional rule set 260 includes rules that are applied or otherwise checked during the validation process, as described in further detail below. In one embodiment, for example, some or all of the data in the data range table 255 and the functional rule set 260 may be variable depending upon the core initiating the data or service request. In other words, there may be default rules or data limits which are adjustable depending upon from which core a data or service requests is received.

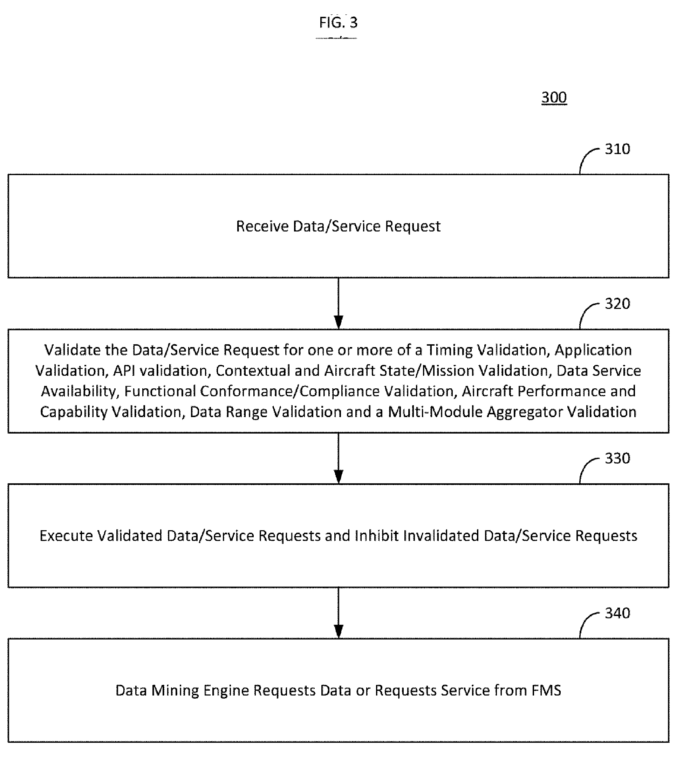

FIG. 3 is a flow diagram illustrating an exemplary method 300 for operating the touch screen controller 150, in accordance with an embodiment. As illustrated in FIG. 1, the touch screen controller 150 receives a data or service request from one of the cores 205 and 210 at the core interface 180. (Step 310). A data request may be for any data produced, computed, regulated, or measured by the FMS 110. For example, the data may be engine speed, aircraft state (position, altitude, heading, speed, or the like), flight route and trajectory (altitude, speed and time profile), or the like. A service request may be a request to change a parameter of the flight plan. For example, altitude profile changes, speed profile, route changes or the like.

The request is then validated by the validator against one or more of the rules in the functional rule set 260. (Step 320). The functional rule set may include rules directed towards, for example, timing validation, application validation, API validation, contextual and aircraft state/mission validation, data service availability, functional conformance/compliance validation, aircraft performance and capability validation, data range validation and a multi-module aggregator validation.

The timing validation rules ensure that FMS 110 performance and critical FMS functions such as navigation, guidance, and flight trajectory calculation are not affected by the received data or service request. The validator 245 may check to see if the core 200 is idle. The core 200 may be considered idle when the use of the data mining engine 160 is below a predetermined threshold. Accordingly, the validator 245 may allow the applications from the cores 205 and 210 to access the data mining engine when the core 200 is idle or below the predetermined threshold as additional requests from the cores 205 and 210 would not be affecting the throughput of the higher priority applications or FMS 110 which is mainly servicing these requests. As discussed above, the FMS 110 and the touch screen display system 130 communicate over an A429 or RS422 bus which utilizes page requests for data exchanges. The amount of data required by the applications operating on the core 200 such as performance and fuel optimization based applications, crew safety advisory applications, or the like is known as part of the core application certification. The data required by the core varies based on flight phase and the data required for each phase would be taken into account by the functional ruleset. As discussed above, the application registry 250 includes timing rules for each application operating on the cores 205 and 210 which are set such that the throughput of data requests to the FMS 110 from the core 200 is unaffected by the new data or service request. In other words, the core interface 180 protects the core 200 by preventing the applications executing on the cores 205 and 210 from overloading the FMS 110 and consuming too many resources. Accordingly, validator 245 may monitor the frequency of requests originating for each application on the cores 205 and 210 to ensure that the frequency of the requests does not exceed the timing rules for the respective application in the application registry 250.

The application validation rules check to ensure that an application running on core 205 or 210 is authorized to make a data/service request from the FMS 110. As discussed above, an authorized application list may be saved in the application registry 250. By only allowing authorized application to make data or server requests, the touch screen controller is a fail-safe system. Similarly, the API validation ensures that API requests that are not registered for a specific application in the application registry 250 are not executed. In other words, an application operating on core 205 or 210 must follow certain rules and protocols for requesting data from the FMS 110 as defined by the API. If the data request does not follow the API, the validator 245 would inhibit the request.

The contextual and aircraft state/mission validation validates whether the data/service request are allowed during the particular context (e.g., flight phase), aircraft state, or mission of the flight (e.g., special or emergency missions). The core interface 180 can determine the flight phase, aircraft state and mission of the flight by requesting the respective data points from the FMS 110 though the data mining engine 160. As an example, a data request from an application dedicated towards a vertical speed takeoff calculations would not be expected during a cruise phase of a flight. Likewise, all or some of the applications operating on the cores 205 and 210 may be inhibited during certain special mission executions (e.g., an engine is out, emergency landings or the like). As another example, requests for optimal altitudes in International Civil Aviation Organization (ICAO) airspace should only result in ICAO altitudes and not RVSM altitudes.

The functional conformance and compliance validation rules check whether a data or service request is conforming to the planned active flight plan, aircraft state and speed profile. In other words, the validator 245 ensures that a service request to change a parameter of the flight fits within the intended flight plan and flight profile. For example, if the application is a requesting for altering the vertical profile of the flight, the validator 245 would check the requested altered vertical profile against planned altitude constrains in the flight path. As another example, if the application is requesting for a "Reaching Report of FL270," where the current cruise flight level is 240FL, the validator 245 would inhibit the request as a floor of 270FL is not achievable when the current floor is 240FL. As another example, a request for a flight route insertion or modification would be checked by the validator 245 against the planned origin and destination pair. As yet another example, a request for flight route insertion or modification from an application would be validated by the validator 245 for whether the requested flight route is flyable (e.g., no discontinuities, sharp turns or the like) and conforms to the planned route.

The aircraft performance and capability validation rules ensure that any state change requested by an application is within the aircraft performance and capability limits as defined in the data range table 255. For example, the validator 245 would check a "set up altitude" service request to a maximum certified altitude of the aircraft 100 per the data range table 255. Similarly, any service request from an application from the core 205 or 210 should be validated by the validator 245 against the speed envelope that the aircraft 100 is capable of flying.

The data range validation rules act as first level validation of inputs provided on a service request. The inputs are compared against the absolute range limits without considering other parameters or conditions prevailing at time of the request. For example, a request for trajectory computation at a particular flight level results in validation of the flight level against the maximum certified altitude of the aircraft as part of the data range validation. In contrast, the aircraft performance and capability validation rules also considers the contextual information at the time of request to evaluate the performance limits and compares the inputs against those limits. For the example above, the performance limits at the time of the request is computed based on the weight, environmental and operational conditions and a maximum altitude is computed (which can be lower than the maximum certified altitude).

The multi-module aggregator and validator validation rules translate user interactions through the IO system 190 (e.g., voice (speech), gesture, radio panel speaker, eye tracking, or the like) before sending the user commands to Data Mining Engine. In addition, this module monitors multi-module inputs being issued concurrently and aggregates those inputs into single appropriate user command. For example, user may be issuing a voice command along with gestures simultaneously using which this validation rule fuses (merges) the data from both of these input modalities into a single validated and executable command.

When the validator validates the data or service request against all of the validation rules, the core interface 180 transmits the data or service request to the data mining engine 160 and inhibits any data or service request which fails any one or more of the validation rules. (Step 330). When a request is inhibited, a request status is sent back to the respective applications. As discussed above, the data mining engine then translates data or service request into a command on the A429 or RS422 bus for the FMS to execute. (Step 340).

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An aircraft, comprising:
a touch screen controller configured to be mounted in an aircraft cockpit in place of a multi-purpose control display unit and configured to communicate with a plurality of avionics systems including an aircraft flight management system) and a communication management function via a standard multi-purpose control display unit interface, the touch screen controller comprising;
a first core comprising a data mining engine, a first processor and a first memory, the first processor configured to:
execute first level certified applications, the first level certified applications configured to request access to the data mining engine, the data mining engine configured to request and retrieve page data from the standard multi-purpose control display unit interface, where the page data comprises active flight plan data, fuel and weights data, aircraft state data, and aircraft sensor data; and
execute a core interface, the core interface controlling access to the data mining engine;
a second core comprising a second processor and a second memory, the second processor configured to execute second level certified applications, the second level certified applications having a lower certification level than the first level certified application, the second level certified applications configured to request access to the data mining engine through the core interface; and
a third core comprising a third processor and a third memory, the third processor configured to execute uncertified applications, the uncertified applications having a lower certification level than the second level certified application, the uncertified applications configured to request access to the data mining engine through the core interface,
wherein the core interface is further configured to:
determine when the executed first level certified applications are idle;
determine application service characteristics, the application service characteristics comprising a periodicity, a type of service, and a registry specification of the respective requesting second level certified application or uncertified application;
determine a flight phase and a flight mission context of the aircraft based upon data from the flight management system; and
grant access to the data mining engine to the second core and the third core when all of:
the first level certified applications are idle;
the flight phase of the aircraft matches a flight phase associated with the respective second level certified application or uncertified application;
the service characteristics associated with the respective second level certified application or uncertified application are within the registered service configuration of core interface; and
the service request associated with the respective second level certified application or uncertified application is within aircraft performance limits or operational or mission limits.

2. The aircraft of claim 1, wherein the first processor, the second processor and the third processor are a single processor.

3. The aircraft of claim 1, wherein the first memory, the second memory and the third memory are a shared combination of memory and the first core operates on a first partition in the shared combination of memory, the second core operates on a second partition in the shared combination of memory, and the third core operates on a third partition in the shared combination of memory.

4. The aircraft of claim 1, wherein the core interface is further configured to determine a maximum periodicity of the second level certified application or uncertified application and grant access to the data mining engine to the second core and the third core when a frequency of the service request associated with the respective second level certified application or uncertified application is less than the maximum periodicity for the respective second level certified application or uncertified application.

5. The aircraft of claim 1, wherein the first level certified applications are determined to be idle when requests to the data mining engine by the first core are below a predetermined threshold.

6. The aircraft of claim 1, wherein the data mining engine is configured to translate each request for data into at least one page or system change request on the standard multi-purpose control display unit interface.

7. A touch screen controller, comprising:
a first core comprising a data mining engine, a first processor and a first memory, the first processor configured to:
execute first level certified applications, the first level certified applications configured to request access to the data mining engine, the data mining engine configured to request and retrieve page data from a flight management system; and
execute a core interface, the core interface controlling access to the data mining engine;
a second core comprising a second processor and a second memory, the second processor configured to execute second level certified applications, the second level certified applications having a lower certification level than the first level certified application, the second level certified applications configured to request access to the data mining engine through the core interface; and
a third core comprising a third processor and a third memory, the third processor configured to execute uncertified applications, the uncertified applications having a lower certification level than the second level certified application, the uncertified applications configured to request access to the data mining engine through the core interface,
wherein the core interface is further configured to:
determine when the executed first level certified applications are idle; and
determine application service characteristics, the application service characteristics comprising a periodicity, a type of service, and a registry specification of the respective requesting second level certified application or uncertified application; and
determine a flight phase and a flight mission context of the aircraft based upon data from the flight management system; and
grant access to the data mining engine to the second core and the third core when all of:
the first level certified applications are idle;
the flight phase of the aircraft matches a flight phase associated with the respective second level certified application or uncertified application;
the service characteristics associated with the respective second level certified application or uncertified application are within the registered service configuration of core interface; and
the service request associated with the respective second level certified application or uncertified application is within aircraft performance limits or operational or mission limits.

8. The touch screen controller of claim 7, wherein the data mining engine is communicatively coupled to the flight management system via a standard multi-purpose control display unit interface.

9. The touch screen controller of claim 7, wherein the first processor, the second processor and the third processor are a single processor.

10. The touch screen controller of claim 7, wherein the core interface is further configured to determine a maximum periodicity of the second level certified application or uncertified application and grant access to the data mining engine to the second core and the third core when a frequency of the service request associated with the respective second level certified application or uncertified application is less than the maximum periodicity for the respective second level certified application or uncertified application.
